Europäisches Patentamt

European Patent Office

Office européen des brevets

(11) Veröffentlichungsnummer: **0 432 366 A1**

## EUROPÄISCHE PATENTANMELDUNG

(21) Anmeldenummer: **90116146.3**

(22) Anmeldetag: **23.08.90**

(51) Int. Cl.5 **F16D 3/78**

(30) Priorität: **04.12.89 DE 3940048**

(43) Veröffentlichungstag der Anmeldung:
**19.06.91 Patentblatt 91/25**

(84) Benannte Vertragsstaaten:
**DE FR GB IT**

(71) Anmelder: **GOETZE AG**
**Bürgermeister-Schmidt-Strasse 17**
**W-5093 Burscheid 1(DE)**

(72) Erfinder: **Barsch, Hans-Peter, Dr.**
**Füllsichel 35**
**W-5093 Burscheid(DE)**
Erfinder: **Hertzsch, Manfred, Dr.**
**Königsberger Strasse 7**
**W-5093 Burscheid(DE)**
Erfinder: **Irmen, Wolfgang, Dr.**
**Am Thelenhof 18**
**W-5090 Leverkusen 1(DE)**

(54) **Drehelastischer Rotationskörper.**

(57) Die Erfindung betrifft einen drehelastischen Rotationskörper (1) für eine elastische Wellenkupplung, bestehend aus einem Elastomerring (2) mit eingelegten Büchsen (3, 4, 5, 6, 7 ,8), die durch einen Fadenstrang (9) miteinander verbunden sind. Die Struktur der Fadenstränge (9) ist so ausgebildet, daß in Umfangsrichtung eine elastische Verformbarkeit erzeugt wird.

FIG. 1

Xerox Copy Centre

EP 0 432 366 A1

## DREHELASTISCHER ROTATIONSKÖRPER

Die Erfindung betrifft einen drehelastischen Rotationskörper für eine elastische Wellenkupplung, bestehend aus einem Elastomerring sowie durch endlose Fadenstränge miteinander verbundene starre Büchsen, die von den Fadensträngen schlingenartig umwickelt im Elastomerring über den Umfang verteilt eingebettet sind.

Zur Drehmomentübertragung zwischen zwei Wellen werden vielfach elastische Kupplungen verwendet, um auftretende Drehschwingungen zu dämpfen. Die Kupplungen bestehen aus druckvorgespannten Elastomerringen mit über den Umfang verteilt eingelagerten Büchsen, über die eine Verbindung mit der treibenden und der getriebenen Welle erzeugt wird. Im Betrieb werden die die Büchsen verbindenden Elastomersäulen auf Druck und auf Zug belastet. Da Elastomere stärker auf Druck als auf Zug beanspruchbar sind, werden bei elastischen Wellenkupplungen Maßnahmen zur Erhöhung der Zugbelastbarkeit durchgeführt. Aus der DE-A1 27 05 598 ist beispielsweise eine elastische Gelenkscheibe für eine Wellenkupplung zu entnehmen, bei der zur Aufnahme der Zugkräfte Fadenwickel verwendet werden, welche je zwei benachbarte Büchsen umschlingen. Jede Büchse ist von zwei Fadenwickeln umschlungen, die einander teilweise überlappen und überkreuzen. Diese Maßnahme erzeugt eine steile Verdrehkennlinie mit einer Feder-Dämpfungscharakteristik, die von der Materialelastizität der Fadenwickel abhängig ist. Die Fadenwickel erlauben somit eine Übertragung von großen Zugkräften. Damit im gewünschten flachen Bereich der Verdrehkennlinie auch eine Dämpfung erzeugt wird, wurden bei der bekannten Wellenkupplung zusätzlich zu den umwickelten Büchsen weitere Büchsen in die umwickelten Büchsen eingelegt. Zwischen den beiden Büchsen ist ein Gummikörper angeordnet, der die Verbindung beider Büchsen sicherstellt. Der Gummikörper sorgt bei geringen Verdrehwinkeln für eine Dämpfung, während bei großen Verdrehwinkeln die Fadenwickeln wirken. Das bedeutet, daß bei geringen Verdrehwinkeln die Kupplung verdrehweich und oberhalb eines bestimmten Drehmomentes verdrehhart ist. Insgesamt ergibt sich eine Parallelschaltung der Federkennlinien von Gummikörpern und Fadenwickeln, die für eine zweistufige Drehmomentübertragung sorgt. In der ersten Stufe wirken die zwischen den Büchsen angeordneten Gummikörper, in der zweiten Stufe wirken die Fadenwickeln.

Nachteilig erweist sich hierbei, daß zur Einstellung der Gesamtfederkennlinie beziehungsweise zur Einstellung von Elastizität und Dämpfung kostenintensive Konstruktions- und Werkzeugänderungen an der Gelenkscheibe beziehungsweise an der Wellenkupplung durchgeführt werden müssen.

Ein weiterer Nachteil ist darin zu sehen, daß durch die Vielzahl der Büchsen die Masse der Kupplung erhöht wird und damit zusätzliche Unwuchtprobleme entstehen. Hinzu kommt, daß die Gummikörper zwischen den Büchsen im Betrieb teilweise auch auf Zug belastet werden, wodurch sie sehr leicht zerstört werden können, was zu klappernden Geräuschen führt, wenn Innen- und Außenbüchse metallisch aufeinanderschlagen.

Der Erfindung liegt die Aufgabe zugrunde, bei einem gattungsgemäßen Rotationskörper für Wellenkupplungen die Elastizität und Dämpfungseigenschaften der Kupplung mit einfachen Mitteln variabel zu gestalten, so daß im Hinblick auf die Herstellungskosten eine günstige Anpassungsfähigkeit für den jeweiligen Anwendungsfall geschaffen ist.

Diese Aufgabe wird erfindungsgemäß dadurch gelöst, daß die Fäden der Fadenstränge eine dreidimensionale Struktur mit definierter elastischer Verformbarkeit aufweisen.

Mit dieser Maßnahme ist die Möglichkeit geschaffen, die Dämpfung und Elastizität über die Fäden der Fadenstränge dem jeweiligen Anwendungsfall anzupassen. Durch die besondere Gestaltung der Fadenstränge werden die Materialeigenschaften der Fadenstränge hinsichtlich ihrer Elastizität ergänzt.

So wird, im Gegensatz zur bekannten Konstruktion, im wesentlichen durch die Struktur der Fäden die Dämpfung erzeugt, und zwar für geringe und große Drehmomente. Eine Änderung der Kupplungskonstruktion ist nicht mehr notwendig.

Vorzugsweise bestehen die einzelnen Fäden der Fadenstränge aus unterschiedlichem Material, um so gezielt die Materialeigenschaften der Fäden, nämlich ihre Eigenelastizität für die erforderliche Kennlinie, nutzbar zu machen. Eine besonders günstige Struktur ergibt sich, wenn die Fäden der Fadenstränge eine maschenförmige Struktur aufweisen. Denkbar wären allerdings auch Flechten oder andere Fadenverkreuzungen. Mit diesen Maßnahmen wird eine flache Kennlinie bei nur geringen Verdrehwinkeln erzeugt, da die dreidimensionalen Volumenelemente der Maschen oder Flechten zunächst nahezu kräftefrei verformbar sind. Erst bei einem gewissen Drehmoment wird der steile Anteil der Kennlinie durch die Eigenelastizität des Maschen-Materials erzeugt. Um den Rotationsfreiheitsgrad der Wellenkupplung bei geringen Drehmomenten nicht zu beeinflussen, verlaufen die Maschenschenkel im wesentlichen tangential zur Drehachse der Wellenkupplung.

Einem weiteren Gedanken der Erfindung gemäß sind die Maschenhohlräume mit elastomerem Werkstoff gefüllt. Durch Einlagerung von elastomerem Material in die räumliche Struktur wird die Dämpfung noch weiter verbessert, da bei Zugbelastung eine dreidimensionale Verformung der umschlossenen Volumenelemente eintritt, d.h., eine Verformung der Maschen erzwingt eine zusätzliche Verformung des eingelagerten Elastomer-Werkstoffes.

Die Erfindung ist in der Zeichnung dargestellt und wird im folgenden näher erläutert. Es zeigen:

**Figur 1 elastische Wellenkupplung mit erfindungsgemäßen Fadensträngen**

**Figur 2 Ausschnittsvergrößerung gemäß II - IV aus Figur 1 in unbelastetem Zustand**

**Figur 3 Belastungszustand der Fadenwickel gemäß Figur 2 mit geringem Verdrehwinkel**

**Figur 4 Belastungszustand der Fadenwickel gemäß Figur 2 mit großem Verdrehwinkel**

**Figur 5 Schaubild einer Verdrehkennlinie**

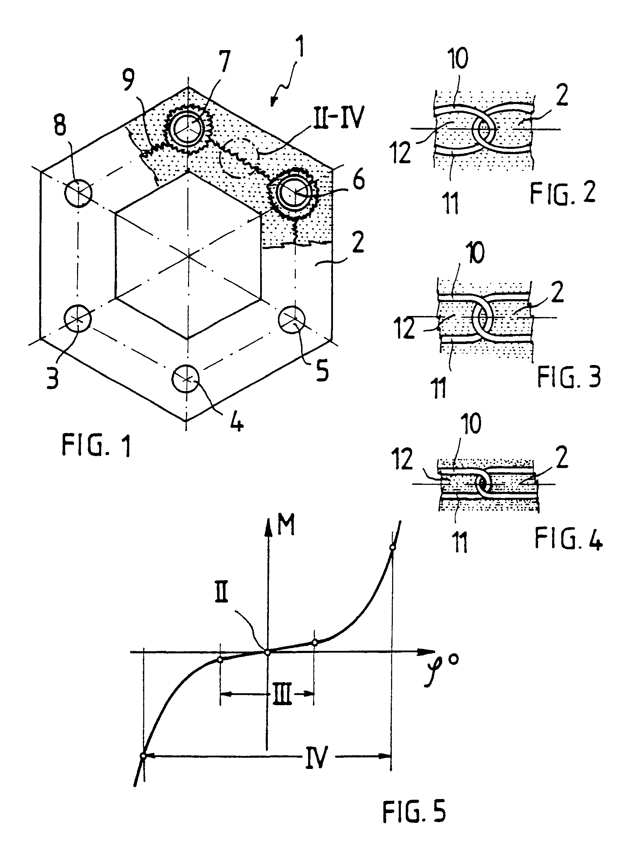

In der Figur 1 ist ein drehelastischer Rotationskörper in Form einer elastischen Wellenkupplung (1) dargestellt. Die Wellenkupplung (1) besteht aus einem Elastomerring (2) mit eingelagerten Büchsen (3, 4, 5, 6, 7, 8). Um die Büchsen (3 bis 8) sind endlose Fadenstränge (9) gewickelt, derart, daß sämtliche Büchsen (3 bis 8) über die Fadenstränge (9) miteinander verbunden sind. Die Fäden der Fadenstränge bestehen aus Kunststoffasern und sind allseitig von Elastomerwerkstoff des Elastomerringes (2) umschlossen.

In den Figuren 2, 3, 4 ist eine erfindungsgemäße maschenförmige Struktur der Fäden der Fadenstränge (9) dargestellt. Die Maschenschenkel (10, 11) verlaufen etwa tangential zur Drehachse der Wellenkupplung (1). Im Gegensatz zu bekannten Fadensträngen wird auf diese Weise eine elastische Verformbarkeit in Umfangsrichtung erzeugt, die zunächst unabhängig von der Materialelastizität der Fäden ist. Beim Auftreten von geringen Zugkräften wird als erstes der Maschenhohlraum (12) - Figur 3 - verkleinert, das eingelagerte Elastomermaterial (2) sorgt dabei für eine gute Dämpfungscharakteristik. Wenn die Zugbeanspruchung zurückgeht, nimmt die Masche ihre ursprüngliche Form gemäß Figur 2 ein. Beim Auftreten von hohen Zugkräften - Figur 4 - nehmen die Maschenschenkel (10, 11) eine gestreckte Lage ein und bilden in Umfangsrichtung eine feste Kette, die lediglich eine vom Fadenmaterial abhängige Elastizität besitzt.

In der Figur 5 ist schaubildlich dargestellt, wie sich die erfindungsgemäße Struktur bei Zugbeanspruchung verhält. Durch Änderung der Strukturdichte beziehungsweise Maschengröße und Maschenanzahl kann auf einfache Weise die Kennlinie verändert werden, so daß für den jeweiligen Anwendungsfall die Kupplung optimal ausgelegt werden kann, ohne konstruktive Änderungen vornehmen zu müssen.

**Ansprüche**

1. Drehelastischer Rotationskörper für eine elastische Wellenkupplung, bestehend aus einem Elastomerring sowie durch endlose Fadenstränge miteinander verbundene starre Büchsen, die von den Fadensträngen schlingenartig umwickelt im Elastomerring über den Umfang verteilt eingebettet sind, dadurch gekennzeichnet, daß die Fäden der Fadenstränge (9) eine dreidimensionale Struktur mit definierter elastischer Verformbarkeit aufweisen.

2. Drehelastischer Rotationskörper nach Anspruch 1, dadurch gekennzeichnet, daß die einzelnen Fäden der Fadenstränge (9) aus unterschiedlichen Materialien bestehen.

3

3. Drehelastischer Rotationskörper nach Anspruch 1 und 2, dadurch gekennzeichnet, daß die Fäden der Fadenstränge (9) eine maschenförmige Struktur aufweisen.

4. Drehelastischer Rotationskörper nach den Ansprüchen 1 bis 3, dadurch gekennzeichnet, daß die Maschenschenkel (10, 11) im wesentlichen tangential zur Drehachse des Rotationskörpers (1) verlaufen.

5. Drehelastischer Rotationskörper nach den Ansprüchen 1 bis 4, dadurch gekennzeichnet, daß die Maschenhohlräume mit elastomerem Werkstoff gefüllt sind.

FIG. 1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-7 528 15 (ERHARDT) <br> * Seite 1, Zeilen 52-56 * <br><br> – – – | 1 | F 16 <br> D 3/78 |
| A | US-A-1 514 181 (STANWOOD) <br> * Seite 1, Zeilen 82-88; Figur 3 * <br><br> – – – | 1,3,4,5 | |
| A | DE-C-8 143 64 (PLEINES) <br> * Das ganze Dokument * <br><br> – – – | 1 | |
| A | DE-B-1 021 212 (KRAUSS-MAFFEI) <br> * Spalte 3, Zeilen 34-36; Figur 1 * <br><br> – – – | 1,4 | |
| A | DE-A-1 425 246 (METZELER) <br><br> – – – | | |
| A | DE-C-6 866 65 (AUTO-PRODUCT) <br><br> – – – – – | | |

RECHERCHIERTE
SACHGEBIETE (Int. Cl.5)

F 16 D

**Der vorliegende Recherchenbericht wurde für alle Patentansprüche erstellt**

| Recherchenort | Abschlußdatum der Recherche | Prüfer |
|---|---|---|
| Den Haag | 20 Februar 91 | ORTHLIEB CH.E. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie,
    übereinstimmendes Dokument